# EUROPÄISCHE PATENTSCHRIFT

(11) **EP 0 531 792 B1**
(45) Veröffentlichungstag und Bekanntmachung des Hinweises auf die Patenterteilung: **05.03.1997**
(21) Anmeldenummer: 92114453.1
(22) Anmeldetag: 25.08.1992
(51) Int. Cl.: H02K 19/10, H02K 29/10, F01P 5/02, H02K 7/106, F01P 7/04, F01P 5/04

(54) **Gebläse, insbesondere für Kraftfahrzeuge**
Fan, especially for vehicles
Ventilateur, particulièrement pour véhicules

(30) Priorität: 11.09.1991 DE 4130066
(43) Veröffentlichungstag der Anmeldung: 17.03.1993
(73) Patentinhaber: Licentia Patent-Verwaltungs-GmbH, 60596 Frankfurt (DE)
(72) Erfinder: Altmann, Manfred, Dipl.-Ing., W-2900 Oldenburg (DE); Tillner, Siegfried, Dipl.-Ing., W-2900 Oldenburg (DE); Lindig, Christian, Dipl.-Ing., W-2905 Edewecht (DE); Oltmanns, Karl-Heinz, Dipl.-Ing., W-2900 Oldenburg (DE)
(74) Vertreter: Zangs, Rainer E., Dipl.-Ing.

(56) Entgegenhaltungen:
- FR-A- 2 109 144
- US-A- 4 962 734
- DESIGN ENGINEERING April 1983, LONDON GB Seite 11 'reluctance motor finds role in variable speed control'
- CONFERENCE RECORD OF THE 1990 IEEE INDUSTRY APPLICATIONS SOCIETY ANNUAL MEETING 12 Oktober 1990 US Seiten 241-246, XP000204045 R. KRISHNAN ET AL " A design procedure for axial field switched reluctance motors "
- PATENT ABSTRACTS OF JAPAN vol. 10, no. 346 (M-537)(2402) 21. November 1986 & JP-A-61145315

## Beschreibung

Die Erfindung betrifft ein Gebläse, insbesondere für Kraftfahrzeuge, mit einem Elektromotor zum Antrieb eines mit Schaufeln versehenen Lüfterrades gemäß dem Oberbegriff des Patentanspruchs 1 angegebenen Art.

In Kraftfahrzeugen werden bereits Gebläse für unterschiedliche Funktionen wie für die Kühlung von Kraftfahrzeugmotoren oder in Klimaanlagen eingesetzt. Hierbei werden infolge zusätzlicher Hilfsgeräte an Kraftfahrzeugen, Zugmaschinen und Bussen laufend höhere Kühlanforderungen gestellt, was sich auch auf die Antriebe für die Lüfterräder in den Gebläsen auswirkt.

So ist durch die DE-PS 2 349 945 ein Antrieb für das Kühlgebläse einer Brennkraftmachine bekannt, bei dem die Gebläsewelle über eine Überholkupplung mit einer Antriebswelle für einen brennkraftmaschinenseitigen Antrieb verbunden ist und bei dem mittels eines Elektromotors, dessen Rotor auf der Gebläsewelle angebracht ist, das Kühlgebläse mit einer höheren Drehzahl als der vom brennkraftseitigen Antrieb abgegebenen antreibbar ist. Dies hat den Nachteil, daß der Elektromotor zur Erzeugung der höheren Drehzahl trotz des bereits vom brennkraftseitigen Antrieb geschaffenen Drehzahlniveaus die gleiche elektrische Energie benötigt wird wie ein einfacher elektrischer Gebläseantrieb.

Eine Verbesserung dieses bekannten Antriebes wird gemäß der DE-PS 33 45 340 dadurch erzielt, daß der Stator des Elektromotors auf der Antriebswelle des brennkraftseitigen Antriebes fest angeordnet ist. Hierdurch wird der Einsatz eines Elektromotors mit geringerer Leistung ermöglicht, aber der Aufbau des gesamten Gebläses ist durch den Einsatz der erforderlichen Kupplung und der aufwendigen Ansteuerschaltung noch sehr kompliziert und teuer.

Weiterhin sind direkte Antriebe von Kühlerventilatoren durch Permanentmagnet-Motoren bekannt, deren Einsätze bei höheren Rotortemperaturen kritisch sind. Infolge der großen Wickelköpfe bei derartigen leistungsstarken Motoren ist außerdem eine kompakte Ausbildung des Gebläses nicht möglich. Ebenfalls sind hierbei Störungen durch Überkreuzen der Drähte der einzelnen Phasen nicht immer zu vermeiden.

Durch die US-A- 4,962,734 ist ein Gebläse zur Kühlung eines Radiators bekannt, wobei als Antriebsmotor ein Reluktanzmotor mit axialem Feld vorgesehen ist.

Weiterhin wird durch die Literaturstelle "Microprocessor control of a variable reluctance motor" (P.H. Chappel et al) Proceedings IEE Vol. 131, Part B No. 2 (1984)" offenbart, wobei die Steuerung dieses Reluktanzmotors über einen Mikroprozessor erfolgt.

Der Erfindung liegt die Aufgabe zugrunde, ein Gebläse, insbesondere für Kraftfahrzeuge zu schaffen, das einen einfachen und robusten Aufbau hat und mittels einer einfachen Ansteuerschaltung leicht regelbar ist. Diese Aufgabe wird durch die im Patentanspruch 1 gekennzeichnete Erfindung gelöst.

Das erfindungsgemäße Gebläse hat durch den Einsatz eines geschalteten Reluktanzmotors einen einfachen und robusten Aufbau und läßt sich leicht schalten. So ist das als Kühlerventilator ausgebildete Gebläse während der Startphase und bei geringen Fahrzeuggeschwindigkeiten durch Bestromung nur einer Phase des geschalteten Reluktanzmotors arretierbar. Hierdurch wird der Luftstrom durch den Kühler verringert und eine schnellere Erwärmung des Kühlwassers, sowie eine Verbesserung des c_{w}-Wertes bei niedriger Geschwindigkeit erreicht.

Durch die vorteilhafte Ausgestaltung des Erfindungsgegenstandes nach Patentanspruch 3 wird erreicht, daß das Lüfterrad frei durchlaufen kann. Hierdurch bietet der vom Luftstrom des Fahrzeugs bewegte Lüfter einen geringeren Luftwiderstand, wodurch der Luftdurchsatz steigt.

Die weitere Ausgestaltung des Erfindungsgegenstandes nach Anspruch 4 ermöglicht eine Umkehrung der Drehrichtung des Kühlerventilators, so daß die erhitzte Luft des Motorraumes durch den Kühlergrill nach außen gedrückt wird und somit eine schnellere Kühlung des Verbrennungsmotors erreicht.

Weitere vorteilhafte Ausgestaltungen des Erfindungsgegenstandes sind den weiteren Unteransprüchen zu entnehmen.

Die Erfindung wird anhand eines Ausführungsbeispiels im folgenden näher beschrieben. Es zeigen:
- Figur 1: einen Teilschnitt durch einen Kühlerventilator,
- Figur 2: einen Längsschnitt durch einen geschalteten Reluktanzmotor,
- Figur 3: einen Querschnitt durch den Stator und den Rotor,
- Figur 4: Kennlinien des aerodynamischen Widerstandes und der Lüfterdrehzahl bei einem geschalteten Reluktanzmotor,
- Figur 5: Kennlinien gemäß Figur 4 für einen Permanentmagnet-Motor,
- Figur 6: Kennlinien des Luftstromes bei normaler und bei umgekehrter Lüfterdrehrichtung und
- Figur 7: ein Schaltbild für die Ansteuerung des tanzmotors.

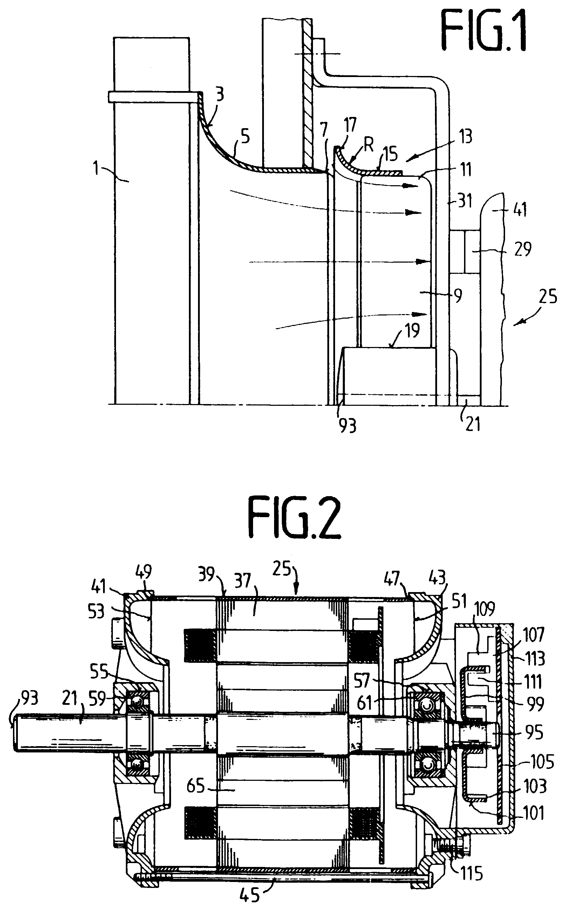

Die Erfindung wird anhand eines Gebläses dargestellt, das als Kühlerventilator in einer Brennkraftmaschine eines Kraftfahrzeuges dient. Die Figur 1 zeigt einen Kühler 1 in einer Brennkraftmaschine eines Kraftfahrzeuges, von dem ein Luftführungsgehäuse 3 mit einem glockenförmigen Einlaß 5 angeordnet ist. Dieser Einlaß 5 endet in einer kreisförmigen Austrittskante 7, vor die Schaufeln 9 eines antreibbaren Lüfterrades 11 drehbar gelagert sind. Die Schaufeln 9 sind an ihren äußeren Umfängen mit einem Abschlußring 13 verbunden, welches aus einem zylindrischen Mantel 15 und einem glockenförmigen Einlaßteil 17 besteht, dessen Form durch einen Krümmungsradius R bestimmt ist.

Die Schaufeln sind einstückig mit einer topfförmigen Nabe 19 ausgebildet, welche auf dem freien Ende 93 einer Antriebswelle 21 eines Elektromotor ausgebildeten geschalteteten Reluktanzmotors 25 fest angeordnet ist. Dieser Reluktanzmotor 25 ist mit einem Lagerschild 41 über einen Lappen 29 mit einer Halterung 31 in der Brennkraftmaschine über nicht dargestellte Schraubverbindungen fest verbunden.

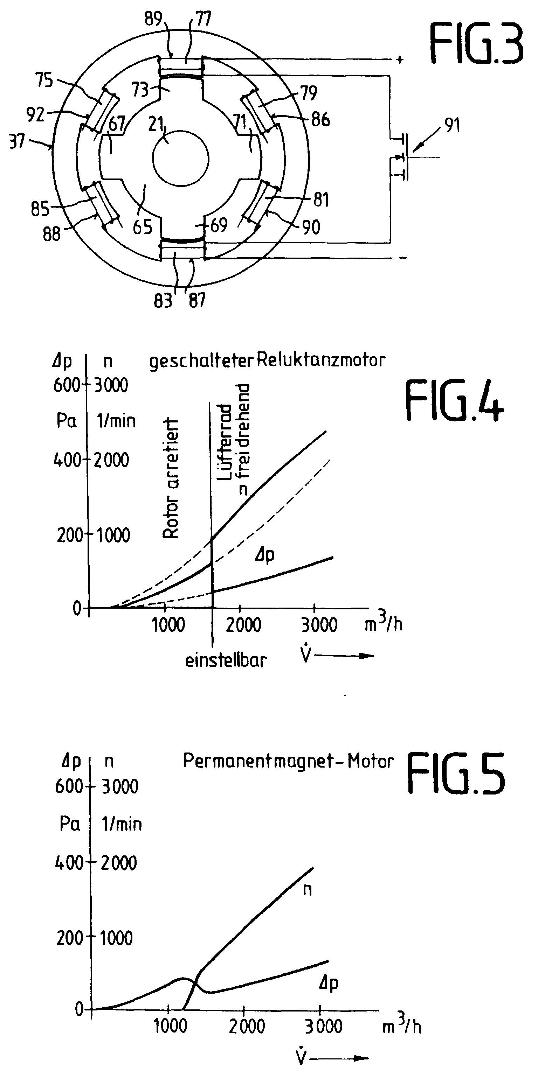

Die Figur 2 zeigt einen Längsschnitt durch den geschalteten Reluktanzmotor 25, wobei der Stator 27 in einem zylindrischen Gehäuseteil 39 angeordnet ist. Die beiden Enden dieses Gehäuseteiles 39 sind durch je ein Lagerschild 41, 43 geschlossen, die durch Verbindungsbolzen 45 fest miteinander verbunden und mit Anlageflächen 47, 49 gegen die Stirnflächen 51, 53 des zylindrischen Gehäuseteiles 39 preßbar sind. Die Lagerschilde 41, 43 weisen zentrisch angeordnete Lagerausnehmungen 55, 57 für Kugellager 59, 61 auf, welche zur Lagerung der Antriebswelle 21 mit einem darauf befestigten Rotor 65 aus einem weichmagnetischen Material dienen. Der Stator 37 und der Rotor 65 sind mit ausgeprägten, lamellierten Rotor- 67, 69, 71, 73 und Statorpolen 75, 77, 79, 81, 83, 85 gemäß Figur 3 versehen. Die Magnetfeld erzeugenden Spulen 86, 87, 88, 89, 90, 92 sind auf die Statorpole 75, 77, 79, 81, 83, 85 aufgewickelt, wobei je zwei sich gegenüberliegende Wicklungen 86/88, 87/89 und 90/92 mit einer Gleichspannungsquelle 91 verbunden sind.

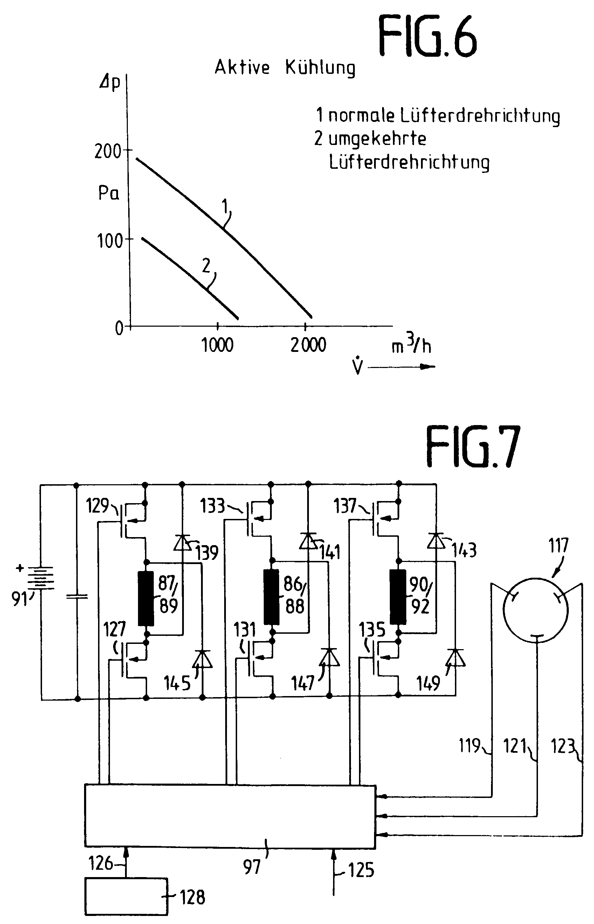

Die einzelnen Wicklungspaare werden zur Erzeugung von den Rotor 65 durchdringenden, veränderbaren Magnetfeldern in Synchronismus mit der Rotorposition sequentiell ein- und ausgeschaltet. Die freien Enden 93, 95 der Antriebswelle 21 ragen aus dem Motorgehäuse (39, 41, 43) heraus, wobei das Lüfterrad 11 an dem Ende 93 der Rotorwelle 21 fest angeordnet ist. Das andere freie Ende 95 ist durch Rotorstellungs-Sensormittel zum Abtasten der augenblicklichen Position des Rotors 65 abtastbar, wodurch entsprechende Rotorstellungssignale an eine Ansteuerschaltung 97 gemäß Figur 7 gegeben werden.

Die Rotorstellungs-Sensormittel bestehen aus einer Taktgeberscheibe 99, welche auf dem freien Ende 95 fest angeordnet ist und am äußeren Umfang 101 parallel zur Rotorwelle 21 angeordnete Taktgeberarme 103 aufweist und einer Geberplatine 105 mit Abtastanordnungen 107 zum Abtasten der mit der Rotorwelle 21 umlaufenden Taktgeberarme 103. Die Abtastanordnungen 107 bestehen aus Gabellichtschrankenanordnungen mit je einem Lichtsender 109, z. B. einer Leuchtdiode und einem Lichtempfänger 111. Die Geberplatine 105 weist drei um 180 Grad zueinander versetzt angeordnete Abtastanordnungen auf, während die Taktgeberscheibe 99 vier um 90 Grad zueinander versetzt angeordnete Taktgeberarme 103 aufweist.

Die Geberplatine 105 ist in einem über das freie Ende 95 der Rotorwelle 21 mit der Taktgeberscheibe 99 stülpbaren topfförmigen Gehäuseteil 113 fest angeordnet, welches mit dem Lagerschild 43 des Motorgehäuses mittels einer Schraubenverbindung 115 fest verbunden ist.

Die als Positionsgeber 117 dienenden Rotorstellungs-Sensormittel leiten gemäß Figur 7 Rotorstellungssignale über Leitungen 119, 121, 123 an die Ansteuerschaltung 97. Diese Ansteuerschaltung 97 erhält über einen weiteren Eingang 125 weitere Signale, welche den gewünschten Drehsinn des Reluktanzmotor 25 sowie den Wert des jeweils gewünschten Drehmomentes wiedergeben. Die Ansteuerschaltung 97, die z. B. aus einem Mikroprozessor bestehen kann, erzeugt dann in Abhängigkeit von den die Stellung des Rotors 65 wiedergegebenen Signalen des Positionsgebers 117 sowie in Abhängigkeit von den am Eingang 125 vorliegenden Signalen entsprechende Signale zum Schalten der Leistungsschalter 127/129, 131/133 und 135/137. Über diese Leistungsschalter werden dann die Wicklungspaare 87/89, 86/88, 90/92, die Dioden 139, 141, 143 oder die Freilaufdioden 145, 147, 149 entsprechend beaufschlagt, wodurch auf den Rotor 65 ein Drehmoment in der gewünschten Stärke und in der gewünschten Richtung ausgeübt wird, und zwar in Abhängigkeit von entsprechenden, der Ansteuerschaltung 97 zugeführten Signalen.

So kann der Reluktanzmotor 25 bei einer bestimmten Fahrzeuggeschwindigkeit über die Ansteuerschaltung 97 stromlos geschaltet werden, derart, daß der Lüfter 11 frei durchlaufen kann. Hierdurch bietet das vom Luftstrom des Fahrzeuges bewegte Lüfterrad 11 einen geringeren Luftwiderstand, wodurch der Luftdurchsatz steigt. Dieser Vorteil ist den Kennlinien gemäß Figur 4 für einen Reluktanzmotor zu entnehmen, während die Figur 5 entsprechende Kennlinien für einen Permanentmagnet-Motor zeigt. Hieraus ist zu erkennen, daß der Reluktanzmotor gegenüber dem Permanentmagnet-Motor erhebliche Vorteile hat.

Außerdem kann über die Ansteuerschaltung 97 nur eine Statorphase in der Startphase und bei geringeren Fahrzeuggeschwindigkeiten bestromt werden, derart, daß das Lüfterrad 11 arretiert wird. Hierdurch wird der Luftstrom durch den Kühler 1 verringert und eine schnellere Erwärmung des Kühlwassers, sowie eine Verbesserung des c_{w}-Wertes bei niedrigen Geschwindigkeiten erreicht.

Weiterhin besteht die Möglichkeit, die Drehrichtung des Lüfterrades 11 über die Ansteuerschaltung 97 bei Stillstand des Fahrzeuges umzukehren. Hierdurch wird dann die erhitzte Luft des Motorraumes durch den Kühlergrill 1 nach außen gedrückt, was zu einer schnelleren Kühlung des Verbrennungsmotors führt. Die Kennlinien für den Luftdurchsatz durch den Kühler 1 sind in der Figur 6 dargestellt.

Auch können der Ansteuerschaltung 97 Signale 126 von einer die Temperatur des Kühlwassers in dem Kühler abfühlenden Abtastanordnung 128 zugeführt werden, wodurch eine aktive Motorkühlung über eine variable Ventilatordrehzahl regelbar ist. Über die Abtastanordnung 128 ist es auch möglich, das Lüfterrad in der Nachlaufphase mit verschiedenen Ventilatordrehzahlen in Abhängigkeit von der Kühlwassertemperatur zu steuern.

Das Gebläse weist einen aus einem geschalteten Reluktanzmotor 25 bestehenden Antrieb auf, bei dem das Drehmoment unabhängig von der Polarität des Phasenstromes ist. Hierdurch kann die Anzahl der Halbleiterschalter in der Ansteuerschaltung 97 reduziert werden. Weiterhin hat der Reluktanzmotor 25 ein hohes Anlaufmoment und ist für extrem hohe Drehzahlen einsatzfähig. Auch sind Kurzschlüsse durch Fehler im Halbleiterschalter nicht möglich, da jeweils eine Motorwicklung in Reihe mit den Halbleiterschaltern liegt. Ebenso kann die Drehmoment-Drehzahl-Charakteristik auf die jeweilige Anwendung einfacher zugeschnitten werden als bei permanent erregten Motoren. Ebenso wird das Betriebsverhalten des Reluktanzmotors 25 durch die Betriebstemperatur nicht negativ beeinflußt. Es sind also höher erlaubte Rotortemperaturen möglich als bei permanentmagneterregten Motoren. Das Gebläse hat einen einfachen Rotor mit einem niedrigen Trägheitsmoment und einen einfachen und robusten Stator.

## Patentansprüche

1. Gebläse für die Kühlung einer Brennkraftmaschine eines Kraftfahrzeuges mit einem Elektromotor zum Antrieb eines mit Schaufeln versehenen Lüfterades (11), wobei als Elektromotor ein über eine Ansteuerschaltung (97) geschalteter Reluktanzmotor (25) verwendet wird, **dadurch gekennzeichnet**, daß die Ansteuerschaltung (97) mit einem Eingang (125) versehen ist, worüber sie Signale erhält, welche den gewünschten Drehsinn des Reluktanzmotors (25) sowie den Wert des jeweils gewünschten Drehmomentes und/oder der gewünschten Drehzahl wiedergeben, und daß in der Startphase und bei geringen Geschwindigkeiten des Fahrzeuges, zur Arretierung des Lüfterrads (11) der Reluktanzmotor (25) über die Ansteuerungschaltung (97) derart ansteuerbar ist, daß nur eine Statorphase bestromt wird.

2. Gebläse nach Anspruch 1, **dadurch gekennzeichnet**, daß die Ansteuerschaltung (97) für den Reluktanzmotor (25) einen Mikroprozessor enthält, welcher aufgrund der Lageermittlung des Rotors (65) das Schalten der Statorwicklungen (86/88,87/89,90/92) bewirkt.

3. Gebläse nach Anspruch 1 oder 2 , **dadurch gekennzeichnet**, daß der Reluktanzmotor (25) bei einer bestimmten Fahrzeuggeschwindigkeit über die Ansteuerschaltung (97) stromlos schaltbar ist, derart, daß das Lüfterrad (11) frei durchlaufbar ist.

4. Gebläse nach einem der vorhergehenden Ansprüche, **dadurch gekennzeichnet**, daß die Drehrichtung des Lüfterrades (11) über die Ansteuerschaltung (97) z. B. bei Stillstand des Fahrzeuges umkehrbar ist.

5. Gebläse nach einem der vorhergehenden Ansprüche, **dadurch gekennzeichnet**, daß die Drehzahl des Lüferrades (11) in Abhängikeit von der Kühlwassertemperatur steuerbar ist.

6. Gebläse nach einem der vorhergehenden Ansprüche, **dadurch gekennzeichnet**, daß das Lüfterrad (11) an einem Ende (93) der Rotorwelle (21) fest angeordnet ist und daß an dem anderen Ende (95) der Rotorwelle (21) Rotorstellungs-Sensormittel zum Abtasten der augenblicklichen Position des Rotors (65) und zum Generieren eines entsprechenden Rotorstellungssignals angeordnet sind.

7. Gebläse nach Anspruch 6, **dadurch gekennzeichnet**, daß die Rotorstellungs-Sensormittel aus einer Taktgeberscheibe (99) , welche auf dem aus dem Motorgehäuse herausragenden freien Ende (95) der Rotorwelle (21) fest angeordnet ist und am äußeren Umfang (101) parallel zur Rotorwelle (21) angeordnete Taktgeberarme (103) aufweist, und einer Geberplatine (105) mit Abtastanordnungen (107) zum Abtasten der mit der Rotorwelle 21) umlaufenden Taktgeberarme (103) bestehen.

## Claims

1. Fan for the cooling of a combustion engine of a motor vehicle, with an electric motor for the drive of a blower wheel (11) provided with vanes, wherein a reluctance motor (25) switched by way of a control circuit (97) is used as electric motor, characterised thereby that the control circuit (97) is provided with an input (125) by way of which it receives signals which reproduce the desired rotational sense of the reluctance motor (25) as well as the value of the respectively desired torque and/or the desired rotational speed, and that in the starting phase and in the case of low speeds of the vehicle the reluctance motor (25) is controllable by way of the control circuit (97) in such a manner for the arresting of the blower wheel (11) that only one stator phase is fed current.

2. Fan according to claim 1, characterised thereby that the control circuit (97) for the reluctance motor (25) comprises a microprocessor which effects the switching of the stator windings (86/88, 87/89, 90/92) on the basis of determination of the position of the rotor (65).

3. Fan according to claim 1 or 2, characterised thereby that in the case of a determined vehicle speed the reluctance motor (25) is switchable to be current free by the control circuit (97) in such a manner that the blower wheel (11) is freely turnable.

4. Fan according to one of the preceding claims, characterised thereby that the rotational direction of the blower wheel (11) is reversible by way of the control circuit (97), for example when the vehicle is stationary.

5. Fan according to one of the preceding claims, characterised thereby that the rotational speed of the blower wheel (11) is controllable in dependence on the cooling water temperature.

6. Fan according to one of the preceding claims, characterised thereby that the blower wheel (11) is fixedly arranged at one end (93) of the rotor shaft (21) and that rotor setting sensor means for the detection of the instantaneous position of the rotor (65) and for the generation of a corresponding rotor setting signal are arranged at the other end (95) of the rotor shaft (21).

7. Fan according to claim 6, characterised thereby that the rotor setting sensor means consists of a pulse transmitting disc (99), which is fixedly arranged on the free end (95) of the rotor shaft (21) projecting out of the motor housing and has pulse transmitter arms (103) arranged at the outer circumference (101) and parallel to the rotor shaft (21), and a transmitter platelet (105) with detecting arrangements (107) for the detection of the pulse transmitter arms (103) circulating with the rotor shaft (21).

## Revendications

1. Ventilateur pour le refroidissement d'une machine à combustion interne d'un véhicule automobile équipé d'un moteur électrique pour l'entraînement d'une roue de ventilateur (11) munie de palettes, un moteur à réluctance (25) commandé par un circuit de commande (97) servant de moteur électrique, caractérisé en ce que le circuit de commande (97) est muni d'une entrée (125) pour recevoir des signaux qui reproduisent le sens de rotation souhaité du moteur à réluctance (25) ainsi que la valeur du couple de rotation souhaité et/ou du nombre de tours souhaité, et en ce que, dans la phase de démarrage, et en présence de vitesses réduites du véhicule, en vue d'arrêter la roue de ventilateur (11), le moteur à réluctance (25) peut être commandé par le circuit de commande (97) de telle sorte qu'une seule phase de stator est alimentée en courant.

2. Ventilateur selon la revendication 1, caractérisé en ce que le circuit de commande (97) comprend, pour le moteur à réluctance (25), un microprocesseur qui provoque la commutation des bobines de stator (86/88, 87/89, 90/92) en fonction de la détermination de la position du rotor (65).

3. Ventilateur selon la revendication 1 ou 2, caractérisé en ce que le moteur à réluctance (25) peut être commuté, à une vitesse déterminée du véhicule, par le circuit de commande (97) sans courant de manière que la roue de ventilateur (11) tourne librement.

4. Ventilateur selon l'une des revendications précédentes, caractérisé en ce que le sens de rotation de la roue de ventilateur (11) peut être inversé par le circuit de commande (97) par exemple à l'immobilisation du véhicule.

5. Ventilateur selon l'une des revendications précédentes, caractérisé en ce que le sens de rotation de la roue de ventilateur (11) peut être commandé en fonction de la température de l'eau de refroidissement.

6. Ventilateur selon l'une des revendications précédentes, caractérisé en ce que la roue de ventilateur (11) est disposée fixement à une extrémité (93) de l'arbre de rotor (21) et en ce qu'à l'autre extrémité (95) de l'arbre de rotor (21) sont disposés des moyens capteurs de position de rotor pour le balayage de la position momentanée du rotor (65) et pour émettre un signal correspondant de position du rotor.

7. Ventilateur selon la revendication 6, caractérisé en ce que les moyens capteurs de position de rotor se composent d'un disque de synchronisation (99), qui est disposé sur l'extrémité libre (95) de l'arbre de rotor (21) sortant du carter de moteur et qui présente, sur la périphérie externe (101), des bras synchronisateurs (103) disposés parallèlement à l'arbre de rotor (21) et d'une platine émettrice (105) munie d'un dispositif de balayage (107) pour le balayage des bras synchronisateurs (103) tournant avec l'arbre de rotor (21).
